# EUROPÄISCHE PATENTSCHRIFT

(11) **EP 2 818 433 B1**
(45) Veröffentlichungstag und Bekanntmachung des Hinweises auf die Patenterteilung: **10.08.2016**
(21) Anmeldenummer: 13173564.9
(22) Anmeldetag: 25.06.2013
(51) Int. Cl.: B65G 1/137

(54) **Automatisierte Kommissionierzelle und Verfahren zum automatisierten Kommissionieren von A+-Stückgütern**
Automated picking cell and method for the automated picking of A+ articles
Cellule de commissionnement automatisée et procédé de commissionnement automatique de marchandises de type A+

(43) Veröffentlichungstag der Anmeldung: 31.12.2014
(73) Patentinhaber: SSI Schäfer Peem GmbH, 8051 Graz (AT)
(72) Erfinder: Winkler, Max, 8010 Graz (AT)
(74) Vertreter: Witte, Weller & Partner Patentanwälte mbB

(56) Entgegenhaltungen:
- WO-A1-2012/163666
- DE-A1-102006 057 658
- DE-A1-102008 046 325
- DE-A1-102010 002 317

## Beschreibung

Die vorliegende Erfindung betrifft eine hochflexible und leistungsfähige Kommissionierzelle für Stückgüter mit einer hohen Zugriffshäufigkeit, die auch als Schnelldreherprodukte oder A⁺-Stückgüter bezeichnet werden. Die Stückgüter fahren dabei im Kreis, damit sich immer eine hinreichende Anzahl von gut zu erkennenden Stückgutkonturen (Bildverarbeitung) in gut greifbarer Lage (Roboter) ergibt.

Die Erfindung betrifft ferner ein Verfahren zum automatisierten Kommissionieren von Stückgütern mit hoher Zugriffshäufigkeit.

Automatisierte Kommissionierzellen zeichnen sich dadurch aus, dass zu kommissionierende Stückgüter von einem Roboter aufgenommen, umgesetzt und abgegeben werden. Klassisch wird ein Kommissioniervorgang (Aufnehmen und Abgeben) manuell durchgeführt. In den meisten Fällen werden die Stückgüter nach dem Prinzip "Ware-zum-Mann" bzw. "Ware-zum-Roboter" angedient. Die zu kommissionierenden Stückgüter werden üblicherweise in Lagerladehilfsmitteln (Behälter, Tablare, Kartons, Paletten, etc.) in einem entfernt angeordneten Lagerbereich bevorratet. Die Lagerladehilfsmittel werden mittels einer Fördertechnik (zum Beispiel Rollenförderer, Gurtförderer, Hängeförderer, Kettenförderer, etc.) vom Lagerbereich zur Kommissionierzelle transportiert. Im Bereich der Kommissionierzelle werden die Stückgüter aus den Lagerladehilfsmitteln entnommen und üblicherweise in Auftragsladehilfsmittel umgesetzt und abgegeben. Beim Auftragsladehilfsmittel handelt es sich wiederum um Behälter, Tablare, Paletten, Kartons oder dergleichen. Auch die Auftragsladehilfsmittel können über eine separate Fördertechnik angedient und abtransportiert werden.

Eine derartige Roboter-Kommissionierzelle ist in der deutschen Patentanmeldung DE 10 2008 046 325 A1 offenbart. In diesem Fall werden die Stückgüter in Lagerbehältern oder Lagertablaren zum Roboter transportiert, wo sie automatisiert in Auftragsbehälter oder auf Pufferförderer umgesetzt werden. Da der Roboter eine sehr hohe Leistung (Umsetzung von mehreren Tausend Stückgütern pro Stunde) hat, müssen entsprechend viele Lagerbehälter zum Roboter transportiert werden. Aufgrund eines sehr hohen Verkehrsaufkommens im Bereich des Roboters gestaltet sich der Transport der Lagerbehälter schwierig, das heißt der Transport ist mit einem großen Steuerungsaufwand verbunden. Da die Kommissionieraufträge üblicherweise viele verschiedene Stückgüter aus einem sehr großen Sortiment umfassen, müssen entsprechend viele unterschiedliche Lagerbehälter zum Roboter hin und vom Roboter weg transportiert werden. Die Lagerbehälter sind üblicherweise sortenrein bestückt, das heißt die Lagerbehälter enthalten jeweils immer nur Stückgüter einer einzigen Stückgutsorte. Positionen und Orientierungen der einzelnen Stückgüter innerhalb der Lagerbehälter werden mittels einer Bilderkennungs- und Verarbeitungseinheit bestimmt, die stromaufwärts zum Roboter angeordnet ist. Eine Erkennung der Stückgüter ist schwierig, weil aufgrund der großen Anzahl von unterschiedlichen Stückguttypen sogenannte Teach-Verfahren nicht angewendet werden können. Bei Teach-Verfahren können (optisch) charakterisierende Stückgut-Attribute zur Beschleunigung der Bilderkennung hinterlegt werden. Je mehr unterschiedliche Attribute hinterlegt sind, desto langsamer arbeitet die Bilderkennung. Deshalb wendet man bei großen Sortimenten üblicherweise (ausschließlich) eine Konturenerkennung an, um zumindest die Position der Stückgüter innerhalb der Lagerbehälter zu bestimmen. Der Stückguttyp wird als bekannt vorausgesetzt. Ausrichtungen sind nicht erkennbar.

Es ist eine Aufgabe der vorliegenden Erfindung, die automatisierten Kommissionierzellen weiter zu optimieren, insbesondere hinsichtlich einer tatsächlichen Kommissionierleistung (Anzahl umgesetzter Stückgüter pro Zeiteinheit), das heißt eine verbesserte Kommissionierzelle sowie ein verbessertes Verfahren bereitzustellen.

Diese Aufgabe wird gelöst durch eine automatisierte Kommissionierzelle für Stückgüter mit einer hohen Zugriffshäufigkeit, die aufweist: einen Umsetz-Roboter, der einen Greifarm mit einer Greifeinheit aufweist, wobei der Greifarm innerhalb eines festen Aktionsraums beweglich ist und wobei die Greifeinheit eingerichtet ist, einzelne der Stückgüter zu greifen; mindestens zwei von einander getrennte Versorgungs-Kreisläufe, die jeweils einen in sich geschlossenen Versorgungsförderer aufweisen, wobei jeder der Kreisläufe den Aktionsraum des Roboters durchquert, wobei jeder der Versorgungsförderer eine Förderfläche aufweist, auf der die Stückgüter chaotisch positioniert sind und ladungsträgerlos endlos umlaufend transportiert werden; mindestens eine Kameraeinheit, wobei jede der Kameraeinheiten eingerichtet ist, eine geometrische Verteilung der Stückgüter auf zumindest einem der Versorgungsförderer optisch zu erfassen und in Bilddaten umzuwandeln, wobei die kreislaufspezifische Verteilung der Stückgüter durch eine jeweilige Position und eine jeweilige Ausrichtung der Stückgüter auf dem jeweiligen Versorgungsförderer definiert ist und wobei jedem der Kreisläufe mindestens eine der Kameraeinheiten zugeordnet ist; und eine Steuereinheit, die zwecks einer Datenübertragung mit jeder der Kameraeinheiten sowie mit dem Roboter verbunden ist und die eingerichtet ist, aus den Bilddaten eine jeweilige Position und Ausrichtung der optisch erfassten Stückgüter zu bestimmen, um den Roboter zum Umsetzen der Stückgüter zu veranlassen, die gemäß einem Kommissionierauftrag benötigt werden, wobei die Steuereinheit für eine Aufrechterhaltung hinreichender kreislaufspezifischer Stückgutdichten sorgt.

Die Kommissionierzelle der Erfindung ist hochflexibel und leistungsfähig. Die Kommissionierzelle der Erfindung ist für Stückgüter mit hohen Zugriffswahrscheinlichkeiten ausgelegt. Die Stückgüter fahren im Kreis, damit sich immer eine hinreichende Anzahl von gut zu erkennenden Konturen für die Bildverarbeitung ergibt. Ferner sind die Stückgüter dann gut greifbar für den Roboter. Weil der Roboter immer wieder Stückgüter aus den Kreisläufen entnimmt, ergeben sich immer wieder neue Anordnungen der Stückgüter. Somit ergeben sich immer wieder neue "Chancen", Stückgüter zu erkennen und zu greifen. Mit der Kommissionierzelle der Erfindung können insbesondere 2000 bis 4000 Stückgüter pro Stunde kommissioniert werden.

Die Stückgüter werden ladungsträgerlos auf den Versorgungsförderern transportiert werden. Dies vereinfacht das Greifen der Stückgüter. Die Stückgüter sind chaotisch über den Versorgungsförderer verteilt. Dies erhöht eine Wahrscheinlichkeit, zumindest eines der Stückgüter erkennen und greifen zu können. Der Roboter hat nahezu keine Leerlaufzeiten, da immer Stückgüter zum Greifen vorhanden sind.

Vorzugsweise weist die Kommissionierzelle ferner zumindest eine Zuführeinheit auf, wobei jede der Zuführeinheiten eine Führung aufweist, um den jeweiligen Versorgungsförderer gezielt mit neuen Stückgütern zu versorgen, wobei jedem der Kreisläufe eine der Zuführeinheiten zugeordnet ist.

Die Zuführeinheiten erlauben eine Automatisierung des Nachschubs. Die neuen Stückgüter können über die Zuführeinheit nachgeführt werden, sollte sich eine kreislaufspezifische Stückgutdichte auf den Versorgungsförderern unter eine Mindestschwelle senken. Die Zuführeinheit sorgt für eine gezielte Zuführung, indem die neuen Stückgüter mechanisch geführt werden. Es können keine neuen Stückgüter neben den Versorgungsförderer fallen. Vorzugsweise wird unter Ausnutzung der Schwerkraft gearbeitet, indem die Zuführeinheiten geneigt angeordnet sind.

Bei einer vorteilhaften Ausgestaltung ist die Steuereinheit ferner einerichtet, aus den Bilddaten kreislaufspezifische Stückgutdichten zu bestimmen und mit kreislaufspezifischen Dichteschwellen zu vergleichen, um ein kreislaufspezifisches Zuführen neuer Stückgüter zu veranlassen, wenn eine der Dichteschwellen unterschritten ist.

Auf diese Weise wird sichergestellt, dass immer eine hinreichende Anzahl von gut zu erkennenden und gut zu greifenden Stückgütern auf jedem der Versorgungsförderer vorhanden ist.

Insbesondere weist jede der Zuführeinheiten einen Stückgutpuffer auf, der zur Bevorratung einer hinreichenden Anzahl der neuen Stückgüter eingerichtet ist.

Es werden vorzugsweise immer so viele neue Stückgüter gepuffert, dass die Zuführeinheiten nicht permanent mit Nachschub versorgt werden müssen. Die Zuführeinheiten selbst stellen den Nachschub für die Versorgungsförderer dar. Dies ist insbesondere dann von Vorteil, wenn die Zuführförderer manuell mit Nachschub versorgt werden. Die Anzahl der gepufferten neuen Stückgüter ist dann hinreichend, wenn die Bedienperson zumindest mehrere Minuten Zeit hat, bevor sie die Zuführeinheit erneut mit neuen Stückgütern befüllen muss. In diesem Fall kann die Bedienperson nämlich mehrere voneinander unabhängige Kommissionierzellen parallel hinsichtlich eines Nachschubs versorgen.

Weiter ist es von Vorteil, wenn jede der Zuführeinheiten eine Fördereinrichtung aufweist, die mit der Steuereinheit zwecks einer Datenübertragung verbunden ist und die von der Steuereinheit getaktet bewegbar ist, um die neuen Stückgüter an einen jeweiligen der Kreisläufe abzugeben.

Diese Maßnahmen erlauben eine Automatisierung der Übergabe der neuen Stückgüter von den Zuführeinheiten auf die Versorgungsförderer. Die Bedienperson wird für die Übergabe nicht benötigt. Die Steuereinheit kann selbst beeinflussen, wie viele der neuen Stückgüter auf einen jeweiligen Versorgungsförderer aufgegeben werden.

Bei einer weiteren vorteilhaften Ausgestaltung ist die Steuereinheit eingerichtet, die Versorgungsförderer während Umsetzvorgängen kontinuierlich fortzubewegen.

Da der Roboter sehr schnell arbeitet (Pickleistung: zum Beispiel 2000 bis 4000 Stückgüter/Stunde), müssen ausreichend Stückgüter bereitgestellt werden. Dies wird dadurch erreicht, dass die Versorgungsförderer kontinuierlich bewegt werden, während der Roboter die Stückgüter von den Versorgungsförderern greift. Durch die kontinuierliche Bewegung der Versorgungsförderer wird die Stückgutdichte zeitlich gewährleistet.

Vorzugsweise weist die Kommissionierzelle ferner eine Auftragsladehilfsmittel-Fördertechnik auf, die eingerichtet ist, Auftragsladehilfsmittel durch den Aktionsraum des Roboters zu transportieren, so dass der Roboter gegriffene Stückgüter an die Auftragsladehilfsmittel abgeben kann, während die Auftragsladehilfsmittel auf der Auftragsladehilfsmittel-Fördertechnik durch den Aktionsraum des Roboters transportiert werden.

Die Stückgüter können direkt in die Auftragsladehilfsmittel abgegeben werden. Die Auftragsladehilfsmittel werden vorzugsweise kontinuierlich am Roboter vorbei bewegt. Dies erhöht die Leistung.

Alternativ kann die Kommissionierzelle ferner eine Auftragsladehilfsmittel-Fördertechnik sowie eine Vielzahl von Übergabeeinrichtungen aufweisen, wobei die Übergabeeinrichtungen zwischen dem Roboter und der Auftragsladehilfsmittel-Fördertechnik angeordnet sind, wobei jede der Übergabeeinrichtungen eine Längserstreckung aufweist, die oberhalb der Auftragsladehilfsmittel-Fördertechnik endet, so dass abgegebene Stückgüter von oben in Auftragsladehilfsmittel bewegbar sind, die auf der Auftragsladehilfsmittel-Fördertechnik transportiert werden.

In diesem Fall erfolgt die Übergabe der gegriffenen Stückgüter indirekt. Die Stückgüter werden zuerst auf die Übergabeeinrichtungen gegeben, bevor sie in die Auftragsbehälter gelangen. So ist es möglich, die Abgabe der Stückgüter vom Transport der Auftragsladehilfsmittel zu entkoppeln. Insbesondere der Roboter muss nicht auf die Auftragsladehilfsmittel warten, bevor er das gegriffene Stückgut an das zugehörige Auftragsladehilfsmittel abgeben kann. Je mehr Übergabeeinrichtungen vorgesehen sind, desto mehr Aufträge können parallel abgearbeitet werden.

Weiter ist es von Vorteil, wenn die Kreisläufe ferner starre Abweiser-Elemente aufweisen, die oberhalb der Förderflächen angeordnet sind und die die Verteilung der Stückgüter auf den sich bewegenden Versorgungsförderern ändern.

Auch diese Maßnahme stellt sicher, dass immer eine hinreichende Anzahl von Stückgütern erkannt und gegriffen werden kann. Deren Verteilung wird permanent geändert. Dies erhöht die Leistung.

Die oben erwähnte Aufgabe wird ferner gelöst durch ein Verfahren zum automatisierten Kommissionieren von mindestens zwei verschiedenen Stückguttypen, vorzugsweise mit einer Kommissionierzelle gemäß der Erfindung, wobei jeder der Stückguttypen eine hohe Zugriffshäufigkeit hat, mit folgenden Schritten: Bereitstellen einer Vielzahl von ersten Stückgütern ausschließlich eines ersten Stückguttyps in einer ausreichend hohen Stückgutdichte, indem die ersten Stückgüter auf einem ersten Versorgungsförderer eines ersten Versorgungs-Kreislaufs endlos kreisend durch einen festen Aktionsraum eines Umsetz-Roboters geführt werden; Bereitstellen einer Vielzahl von zweiten Stückgütern ausschließlich eines zweiten Stückguttyps, der sich vom ersten Stückguttyp unterscheidet, in einer ausreichend hohen Stückgutdichte, indem die zweiten Stückgüter auf einem zweiten Versorgungsförderer eines zweiten Versorgungs-Kreislaufs endlos kreisend durch den festen Aktionsraum des Roboters geführt werden, wobei sich die Kreisläufe nicht kreuzen; Optisches Erfassen einer Verteilung der ersten und zweiten Stückgüter und Erzeugen entsprechender Bilddaten mittels einer Kameraeinheit; Senden der Bilddaten von der Kameraeinheit an eine Steuereinheit; Bestimmen einer Position und einer Ausrichtung von jedem der ersten und zweiten Stückgüter mittels der Steuereinheit; Bestimmen eines Umsetzbefehls für den Roboter auf Basis der bestimmten Positionen und Ausrichtungen und in Abhängigkeit von einem Kommissionierauftrag, der eine vorgegebene Anzahl der ersten und/oder zweiten Stückgüter enthält; Greifen der Stückgüter, Umsetzen der gegriffenen Stückgüter und Abgeben der umgesetzten Stückgüter gemäß dem Umsetzbefehl an eine Zielstelle.

Vorzugsweise werden die Versorgungsförderer während eines Umsetzvorgangs kontinuierlich fortbewegt.

Kreislaufspezifische Stückgutdichten werden insbesondere aus den Bilddaten bestimmt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine Draufsicht auf eine Kommissionierzelle der Erfindung;
- Figur 2: eine perspektivische Ansicht einer Kommissionierzelle der Erfindung;
- Figur 3: ein Flussdiagramm eines Kommissionierverfahrens gemäß der Erfindung;
- Figur 4: ein Flussdiagramm eines Verfahrens zum Nachfüllen von Stückgütern in Abhängigkeit von einer Stückgutdichte;
- Figur 5: ein Blockdiagramm einer Steuereinheit; und
- Figur 6: eine ABC-Verteilung in Form einer Lorenzkurve.

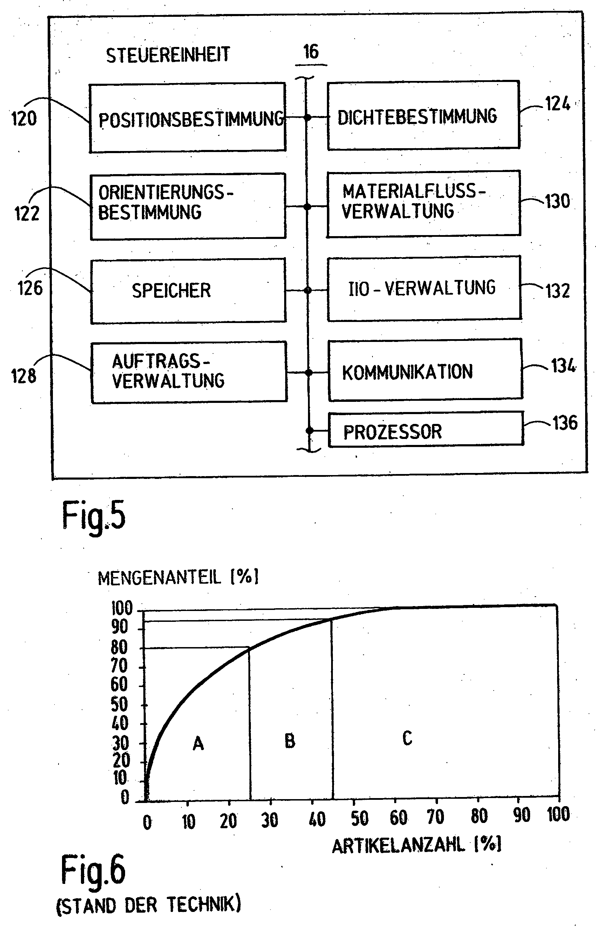

Die vorliegende Erfindung betrifft eine Pick- bzw. Kommissionierzelle 10, insbesondere zum Kommissionieren von Stückgütern mit einer (sehr) hohen Zugriffshäufigkeit. Diese Stückgüter werden auch als Schnelldreher oder A-Artikel bezeichnet. Je höher eine Zugriffshäufigkeits-Kategorie ist, desto besser ist der zugehörige Artikel bzw. das zugehörige Stückgut für die vorliegende Erfindung geeignet. Deshalb ist die Kommissionierzelle 10 besonders für A-Artikel, A⁺-Artikel und AA⁺-Artikel geeignet. A-Artikel bezeichnen in Übereinstimmung mit der ABC-Einteilung solche Artikel, die eine sehr hohe Zugriffshäufigkeit aufweisen. Fig. 6 zeigt eine klassische ABC-Verteilung. Aus dieser Verteilung geht hervor, dass 20 % eines Artikelsortiments genutzt werden, um 80 % aller Kommissionieraufträge abzuarbeiten. Ein (Kommissionier-)Auftrag besteht aus einer oder mehreren Auftragspositionen, die auch als Auftragszeilen bezeichnet werden. Eine Auftragszeile gibt eine jeweilige Menge (Stückzahl) eines Artikeltyps an, den ein Kunde bestellt hat. Aufträge liegen üblicherweise als Datensätze vor. Aufträge können ein Kopffeld, ein Prioritätsfeld und/oder ein Artikelfeld aufweisen. Das Kopffeld kann unter anderem Informationen zum Kunden, der die Bestellung aufgegeben hat, zur (Kunden-)Adresse oder eine Kunden-Identifikationsnummer sowie eine Bestell-/Auftragsnummer aufweisen. Das Prioritätsfeld enthält Angaben darüber, ob es sich um einen normalen Auftrag oder einen Eilauftrag handelt. Ein Eilauftrag ist ein Auftrag mit hoher (Bearbeitungs-)Priorität, der üblicherweise vorrangig vor normalen Aufträgen behandelt wird. Das Artikelfeld weist die Auftragszeilen auf. Jede Auftragszeile weist zumindest Angaben über eine Stückzahl eines bestellten Artikels (Stückgut) und über einen Artikeltyp (Stückguttyp) auf.

Unter dem Begriff "Kommissionieren" wird nachfolgend das Zusammenstellen von Stückgütern gemäß einem (Kommissionier-)Auftrag verstanden. Das Kommissionieren hat zum Ziel, aus einer Gesamtmenge von Gütern (Sortiment) Teilmengen aufgrund von Anforderungen (Kommissionieraufträgen) zusammenzustellen. In der nachfolgenden Beschreibung werden die zu kommissionierenden Stückgüter in AuftragsLadehilfsmittel (zum Beispiel Behälter, Paletten, Kartons, Tablare oder Ähnliches) kommissioniert. Nachfolgend werden exemplarisch nur noch Auftragsbehälter betrachtet.

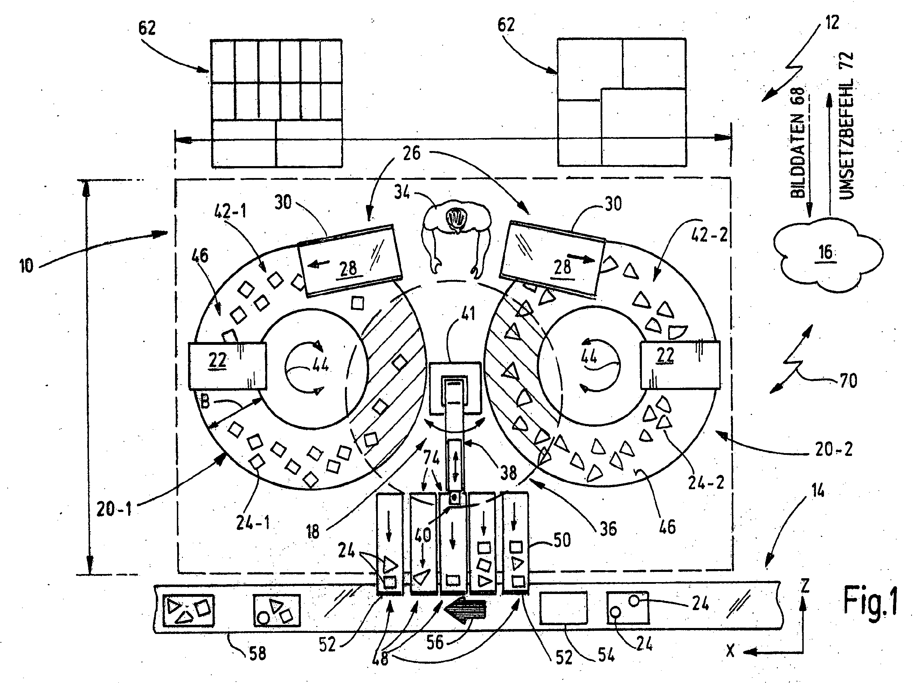

Fig. 1 zeigt eine Draufsicht auf die Kommissionierzelle 10 der Erfindung. Die Kommissionierzelle 10 ist mit einer rechteckigen Strichlinie umrandet. Die Kommissionierzelle 10 umfasst mehrere strukturelle Komponenten bzw. Einheiten, die zum Kommissionieren von Stückgütern 24 benötigt werden, um Kommissionieraufträge abzuarbeiten. Die in der Fig. 1 gezeigte rechteckige Strichlinie veranschaulicht eine exemplarische räumliche Grenze der Kommissionierzelle 10, die Teil eines hier nicht näher dargestellten Lager- und Kommissioniersystems 12 ist. Insbesondere Lager- und Versandbereiche sind hier nicht mehr gezeigt. Aus Gründen einer besseren Übersicht ist lediglich eine Auftragsbehälter-Fördertechnik 14 gezeigt, die sich in einer Längsrichtung X des Systems erstreckt und eine Breite in einer Querrichtung Z des Systems 12 aufweist.

Ferner ist eine (zentrale oder dezentrale) Steuereinheit 16 vorgesehen, die zum Steuern aller Vorgänge eingesetzt wird, die in der Kommissionierzelle 10 stattfinden. Auf die Steuereinheit 16 wird unter Bezugnahme auf Fig. 5 noch näher eingegangen werden.

Eine zentrale Komponente der Kommissionierzelle 10 ist ein Umsetz-Roboter 18, der vorzugsweise räumlich stationär in einem zentralen Bereich der Kommissionierzelle 10 angeordnet ist. Der Umsetz-Roboter 18, der nachfolgend auch kurz als "Roboter 18" bezeichnet werden wird, ist ein Industrieroboter, insbesondere ein SCARA-Roboter (Selective Compliance Assembly Robot Arm, SCARA). Ein SCARA-Roboter ist ein besonderer Industrierobotertyp, dessen Aufbau einem menschlichen Arm ähnelt und der deshalb auch als "horizontaler Gelenkarmroboter" bezeichnet wird (Quelle: Wikipedia). Der SCARA-Roboter 18 besitzt in der Regel vier Achsen und vier Freiheitsgrade. Sämtliche Achsen sind als serielle Kinematik ausgeführt, das heißt der Koordinatenursprung der folgenden Achse ist abhängig von der Position der vorhergehenden Achse. Bei dem SCARA-Roboter sind die erste und die zweite Achse rotatorischer Natur. Die dritte und die vierte Achse sind vielfach aus einem Bauelement hergestellt (zum Beispiel der Kugelrollspindel) und erlauben eine rotatorische und eine lineare Bewegung. Ein "Werkzeug" des Roboters wird am unteren Ende der Z-Achse montiert. Andere Robotertypen können eingesetzt werden.

Der Roboter 18 zeichnet sich durch seine schnellen und wiederholgenauen Bewegungen aus. Der Roboter 18 ist für sogenannte "Pick-and-Place"-Anwendungen optimiert.

Ferner umfasst die Kommissionierzelle 10 der Fig. 1 zumindest zwei (Versorgungs-)Kreisläufe 20. In der Fig. 1 sind exemplarisch zwei Kreisläufe 20-1 und 20-2 gezeigt, die jeweils zum Beispiel einen kreisförmigen Streckenverlauf aufweisen. Es können mehr separate Kreisläufe 20 vorgesehen sein. Jedem der Kreisläufe 20 ist eine Kameraeinheit 22 zugeordnet, um eine Verteilung der Stückgüter 24 optisch erfassen zu können. In der Fig. 1 ist jeder der Kreisläufe 20 mit einer eigenen Kameraeinheit 22 versehen. Es versteht sich, dass die beiden Kreisläufe 20-1 und 20-2 auch nur mit einer einzigen Kameraeinheit 22 überwacht werden können, wenn ein Sichtfeld dieser Kameraeinheit 22 ausreichend groß ist. Die Kameraeinheiten 22 sind so positioniert und eingerichtet, dass kreislaufspezifisch Verteilungen der Stückgüter 24 über eine gesamte Breite B der Kreisläufe 20 erfassbar sind. Die Kameraeinheiten 22 stehen zwecks einer Datenübertragung (siehe zum Beispiel Bilddaten 68) mit der Steuereinheit 16 in Verbindung.

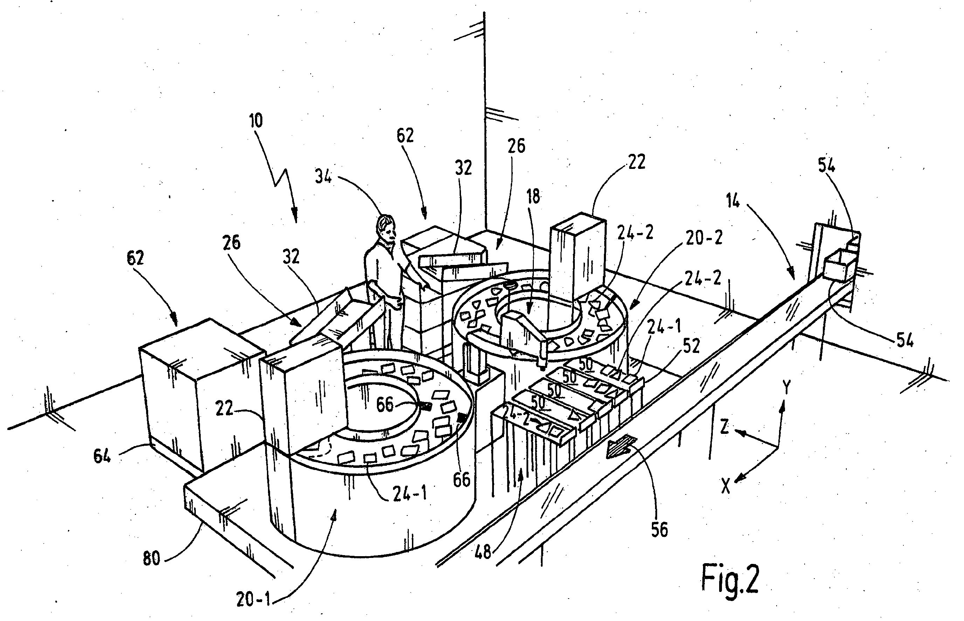

Die Kommissionierzelle 10 weist ferner zumindest eine Zuführeinheit 26 auf. In der Fig. 1 sind zwei Zuführeinheiten 26 gezeigt. Jeder der Kreisläufe 20-1 und 20-2 ist mit einer eigenen Zuführeinheit 26 versehen und verbunden. Die Zuführeinheiten 26 stellen mechanische Führungen 28 dar, um neue Stückgüter 24 aus einem Vorrat 62 für die Kreisläufe 20 bereitzustellen. Die Zuführeinheiten 26 sind so ausgerichtet, dass die neuen Stückgüter 24 den Kreisläufen 20 als Nachschub zugeführt werden können. Die Zuführeinheiten 26 der Fig. 1 sind zum Beispiel tangential zu den kreisförmigen Kreisläufen 20 angeordnet. Die Zuführeinheiten 26 sind oberhalb der Kreisläufe so angeordnet, das die neuen Stückgüter 24 sicher auf die Kreisläufe 20 fallen können. Die Zuführeinheiten 26 können als angetriebene Förderer 30 (zum Beispiel Gurtförderer mit leichter Neigung gegenüber der Horizontalen) oder als (Schwerkraft-)Rutschen 32 (vergleiche Fig. 2) ausgeführt sein. Die Zuführeinheiten 26 können maschinell oder manuell mit den neuen Stückgütern 24 aus den Vorräten 62 gespeist werden. In der Fig. 1 erfolgt die Versorgung der Zuführeinheiten 26 manuell durch eine Bedienperson 34. Dabei ist zwecks Kollisionsvermeidung darauf zu achten, dass die Bedienperson 34 nicht in einen Aktionsraum 36 des Roboters 18 eindringt. Zu diesem Zweck sind entsprechende Sicherheitseinrichtungen (zum Beispiel Lichtschranken zum Auslösen einer Not-Aus-Funktion, ein Schutzzaun öder Ähnliches) vorgesehen, die in der Fig. 1 nicht näher gezeigt sind.

Der (räumlich begrenzte) Aktionsraum 36 des Roboters 18 ist in der Fig. 1 durch eine kreisförmige Strichlinie angedeutet. Der Aktionsraum 36 definiert den Raum, innerhalb welchem sich ein Greifarm 38 des Roboters 18 (maximal) bewegen kann. Der Roboter 18 der Fig. 1 ist mittels eines Gestells 41 stationär innerhalb der Kommissionierzelle 10 fixiert. Das Gestell 41 weist einen hier nicht näher bezeichneten Mast auf, der sich in einer Höhenrichtung Y erstreckt und um den der Greifarm 38 drehbar gelagert ist. Der Greifarm 38 ist üblicherweise mehrteilig ausgebildet und erstreckt sich beweglich in einer radialen Richtung relativ zum Mast. An seinem äußeren radialen Ende weist der Greifarm 38 eine Greifeinheit 40 auf, die dazu eingerichtet ist, die Stückgüter 24 zu greifen. In diesem Zusammenhang ist zu beachten, dass die Stückgüter 24 unterschiedliche Formen, Größen und Gewichte aufweisen können. Die Greifeinheit 40 ist universell einsetzbar und kann alle möglichen Stückguttypen greifen. Alternativ kann die Greifeinheit 40 auch auf einen oder wenige geometrisch spezielle Stückguttypen (z.B. Flüssigkeitsbeutel oder Ähnliches) optimiert sein (Greiferform, Greifergröße, Greifertyp, etc.). Dies kann sowohl das Greifen als auch die Bildverarbeitung (Teach-Verfahren), insbesondere hinsichtlich Zuverlässigkeit und Geschwindigkeit, erleichtern bzw. verbessern.

Jeder der Kreisläufe 20 weist einen (Versorgungs-)Förderer 42 auf. Die Förderer 42 können als Rollenförderer, Bandförderer, Riemenförderer, rotierende Scheibe mit oder ohne mittiges Loch, oder ähnlich ausgebildet sein. Die Förderer 42 laufen, vorzugsweise kontinuierlich, endlos um, wie es durch Pfeile 44 angedeutet ist. Die Förderer 42 können im Uhrzeigersinn oder gegen den Uhrzeigersinn umlaufen. Die Förderer 42-1 und 42-2 der Kreisläufe 20-1 und 20-2 können in der gleichen Richtung oder in entgegengesetzten Richtungen umlaufen. Die Förderer 42 weisen jeweils eine Förderfläche 46 auf, auf der die Stückgüter 24 am Roboter 18 und/oder den Kameraeinheiten 22 vorbeigeführt werden. Die Förderer 42 können einen beliebigen Streckenverlauf aufweisen, solange der jeweilige Verlauf in sich geschlossen ist.

Die Förderer 42 sind so angeordnet, dass sie den Aktionsraum 36 des Roboters 18 durchqueren. Dies ist in der Fig. 1 durch schraffierte Bereiche angedeutet. Die Förderer 42 durchqueren den Aktionsraum 36 vorzugsweise mit ihrer gesamten Breite B, so dass der Roboter 18 jedes der Stückgüter 24 positionsunabhängig von der Förderfläche 46 aufnehmen, das heißt greifen, kann. Die gegriffenen Stückgüter 24 werden dann vom Roboter 18 entweder an Übergabeeinrichtungen 48 abgegeben oder direkt in Auftragsbehälter 54 gegeben, die über die Auftragsbehälter-Fördertechnik 14 durch die Kommissionierzelle 10 oder an der Kommissionierzelle 10 vorbei transportiert werden. Es versteht sich, die Übergabeeinrichtungen 48 alle so angeordnet sind, dass sie sich zumindest teilweise mit dem Aktionsraum 36 des Roboters 18 überlappen.

In der Fig. 1 sind exemplarisch fünf Übergabeeinrichtungen 48 in Form von geneigten (Schwerkraft-)Rutschen 50 gezeigt. Am jeweiligen stromabwärts gelegenen Ende der Übergabeeinrichtungen 48 können bewegliche Anschläge 52 vorgesehen sein, um die Stückgüter 24 zu sammeln. Die Anschläge 52 stehen in einer Sammelstellung gegenüber einer Transportfläche der Übergabeeinrichtungen 48 vor und verhindern so ein Abrutschen der gesammelten Stückgüter 24 in die Auftragsbehälter 54. In einer Freigabestellung sind die Anschläge 52 nach unten bewegt und geben so den Weg für die gesammelten Stückgüter 24 in die Auftragsbehälter 54 frei. Die Übergabeeinrichtungen 48 können z.B. auch als Wippen oder Kipprutschen ausgeführt sein, was eine schnelle Befüllung der Auftragsbehälter 54 unterstützt.

Die Auftragsbehälter 54 werden in einer Förderrichtung 56 auf der Auftragsbehälter-Fördertechnik 14 an den Übergabeeinrichtungen 48 vorbei transportiert. Die Auftragsbehälter-Fördertechnik 14 kann zum Beispiel als Gurtförderer 58 implementiert sein. Vorzugsweise wird jedoch eine Staurollenbahn eingesetzt, um die Auftragsbehälter 54 getaktet und einzeln an den Übergabeeinrichtungen 48 vorbeizuführen.

Die Übergabeeinrichtungen 48 überragen die Auftragsbehälter-Fördertechnik 14 leicht, um einen Transfer der gesammelten Stückgüter 24 in die Auftragsbehälter 54 mittels Schwerkraft zu ermöglichen. Die Auftragsbehälter 54 können vorkommissioniert sein. Die Auftragsbehälter 54 können getaktet oder kontinuierlich an den Übergabeeinrichtungen 48 vorbeigeführt werden. Die Übergabeeinrichtungen 48 entkoppeln den Greifprozess des Roboters 18 vom Transportprozess der Auftragsbehälter 54 und erlauben eine parallele Abarbeitung mehrerer Kommissionieraufträge gleichzeitig. Die Übergabeeinrichtungen 48 implementieren eine Puffer- und Sammelfunktion. Es versteht sich, dass die Übergabeeinrichtungen 48 lediglich optional sind. Wenn die Übergabeeinrichtungen 48 nicht vorhanden sind, verläuft die Auftragsbehälter-Fördertechnik 14 direkt durch die Kommissionierzelle 10, um es dem Roboter 18 zu ermöglichen, die gegriffenen Stückgüter 24 direkt an die Auftragsbehälter 54 abzugeben.

Unter Bezugnahme auf Fig. 2 wird nachfolgend eine Funktionsweise der Kommissionierzelle 10 näher erläutert. Die Fig. 2 zeigt eine perspektivische Ansicht der Kommissionierzelle 10. Die Kommissionierzelle 10 der Fig. 2 unterscheidet sich nur leicht von der Kommissionierzelle 10 der Fig. 1. Die Kommissionierzelle 10 der Fig. 2 weist Rutschen 32 anstatt angetriebenen Förderern 30 als Zuführeinheiten 26 auf. Ferner sind die Kreisläufe 20, der Roboter 18, die Kameraeinheiten 22, die Zuführeinheiten 26 und die Übergabeeinrichtungen 48 auf einer beweglichen Plattform 80 angeordnet. Die bewegliche Plattform 80 ermöglicht es, dass die Kommissionierzelle 10 an beliebigen Orten relativ zur Auftragsbehälter-Fördertechnik 14 angeordnet werden kann, die üblicherweise stationär positioniert ist. Die bewegliche Plattform 18 ermöglicht es auch, die Kommissionierzelle 10 bedarfsabhängig einzusetzen. Es können mehrere Kommissionierzellen 10 hintereinander bzw. nebeneinander entlang der Auftragsbehälter-Fördertechnik 14 angeordnet werden. Wenn die Kommissionierzellen 10 nicht (mehr) benötigt werden, kann Raum für andere Kommissionierautomaten oder Kommissionierarbeitsstationen geschaffen werden.

Die Kameraeinheiten 22 erzeugen in regelmäßigen Abständen oder kontinuierlich Bilder der Verteilungen der Stückgüter 24 auf den Förderern 42 der Kreisläufe 20. Die entsprechenden Bilddaten 68 liefern die Kameraeinheiten 22 zum Beispiel über eine drahtlose Verbindung 79 (siehe Fig. 1) an die Steuereinheit(en) 16. Die Steuereinheit 16 bestimmt aus diesen Bilddaten 68 kreislaufspezifische Verteilungen der Stückgüter 24. Die Steuereinheit 16 bestimmt mittels entsprechender Algorithmen insbesondere eine Position von jedem der Stückgüter 24 auf jedem der Förderer 42 sowie eine Ausrichtung von jedem der Stückgüter 24. Ferner kann die Steuereinheit 16 eine Stückgutdichte (Anzahl von Stückgütern 24 pro Flächeneinheit) bestimmen. Die Positionen und Ausrichtungen werden vom Roboter 18 benötigt, um die Stückgüter 24 von den Förderern 42 zu greifen. Die Stückgutdichte wird benötigt, um dafür zu sorgen, dass immer eine ausreichende Anzahl von Stückgütern 24 auf den jeweiligen Förderern 42 vorhanden ist. Eine ausreichend hohe Anzahl von Stückgütern 24 auf den Förderern 42 stellt sicher, dass der Roboter 18 zu jedem Zeitpunkt zumindest eines der Stückgüter 24 greifen kann.

Um eine Geschwindigkeit der Bildverarbeitung (Positions-, Ausrichtungs- und ggf. Dichtebestimmung) zu erhöhen, erfolgt die Erkennung vorzugsweise auf Basis von "gelernten Eigenschaften" der Stückgüter 24, und nicht wie üblich auf Basis einer Konturenerkennung. Die Konturenerkennung ist viel zu langsam. Um jedoch mit gelernten Attributen im Rahmen der Bildverarbeitung arbeiten zu können, dürfen nicht allzu viele verschiedene Stückguttypen an den Kameraeinheiten 22 vorbeibewegt werden. Der Bilderkennungsalgorithmus arbeitet umso schneller, je weniger verschiedene Stückguttypen (zum Beispiel 2 bis 3 Typen) auf den Förderern 42 transportiert werden. Deshalb werden die Förderer 42 bzw. die Kreisläufe 20 vorzugsweise ausschließlich mit einem einzigen Stückguttyp bestückt. In den Beispielen der Fig. 1 und 2 ist der erste Kreislauf 20-1 ausschließlich mit Stückgütern 24-1 eines ersten Stückguttyps bestückt. Der zweite Kreislauf 20-2 ist ausschließlich mit Stückgütern 24-2 eines zweiten Stückguttyps bestückt. Wenn nur ein Stückguttyp pro Kreislauf 20 bereitgestellt wird, kann der Bildverarbeitungsalgorithmus besonders effizient arbeiten. Die Positionen, Ausrichtungen und Dichten lassen sich schnell rechnerisch ermitteln. Schnelligkeit ist beim vorliegenden Verfahren ein entscheidendes Kriterium, da insbesondere A-Artikel, A⁺-Artikel und AA⁺-Artikel kommissioniert werden.

Die Positionen und Ausrichtungen werden benutzt, um Umsetzbefehle 72 (vergleiche Fig. 1) für den Roboter 18 zu erzeugen. Die Steuereinheit 16 sendet die Umsetzbefehle 72 an den Roboter 18, um den Roboter 18 zu veranlassen, gezielt Stückgüter 24 von den Förderern 42 zu greifen, umzusetzen (das heißt zu bewegen) und an die Übergabeeinrichtungen 48 und/oder die Auftragsbehälter 54 abzugeben. Die Umsetzeinrichtungen 48 und/oder die Auftragsbehälter 54 stellen somit Zielstellen 54 dar. Die Förderer 42 stellen Quellen dar.

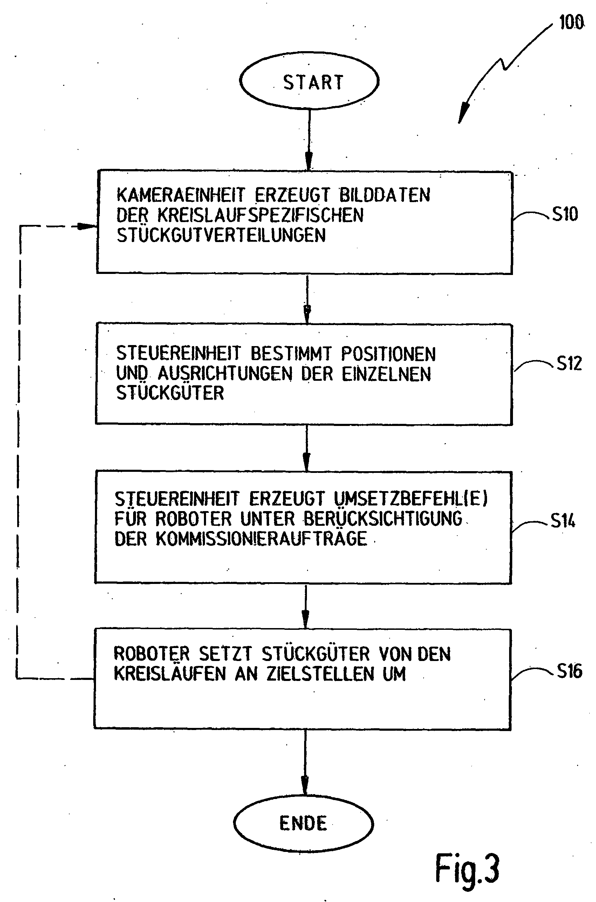

Der oben beschriebene Umsetzablauf wird nachfolgend unter Bezugnahme auf Fig. 3 abstrakt erläutert. Fig. 3 zeigt ein Flussdiagramm 100 zum automatisierten Kommissionieren mit einer Kommissionierzelle gemäß den Fig. 1 und 2.

In einem ersten Schritt S10 erzeugt die Kameraeinheit 22 die Bilddaten 68 der kreislaufspezifischen Stückgutverteilungen. Die Bilddaten 68 werden von der Kameraeinheit 22 an die Steuereinheit 16 gesendet, vorzugsweise drahtlos. In einem Schritt S12 bestimmt die Steuereinheit 16 zumindest die Positionen und Ausrichtungen der einzelnen Stückgüter 24 kreislaufspezifisch. Sobald die Positionen und Ausrichtungen der einzelnen Stückgüter 24 bestimmt sind, erzeugt die Steuereinheit 16 die erforderlichen Umsetzbefehle 72 und sendet diese an den Roboter 18, um Kommissionieraufträge abzuarbeiten. Dies geschieht in einem Schritt S14. Anschließend setzt der Roboter 18 die Stückgüter 24 von den Förderern 42 an die Zielstellen 54 in einem Schritt S16 um. Dieser Ablauf wiederholt sich fortlaufend, wie es in der Fig. 3 durch-einen Strichlinienpfeil angedeutet ist.

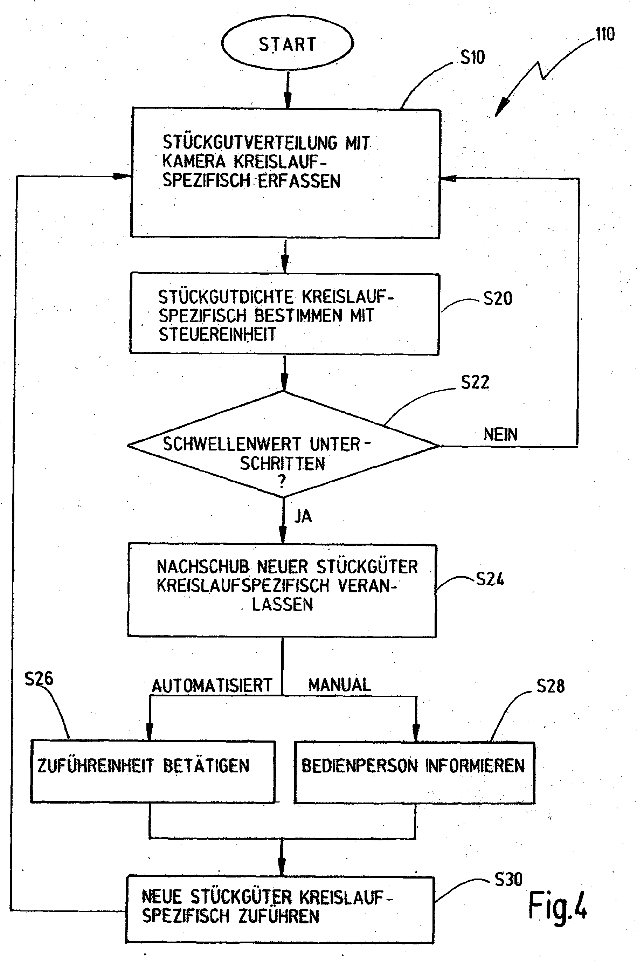

Falls eine sehr hohe Anzahl der Stückgüter 24 mit der Kommissionierzelle 10 umzusetzen ist, sollte immer eine hinreichende Anzahl der Stückgüter 24 auf den Förderern 42 vorhanden sein. Deshalb ist es erforderlich, die kreislaufspezifischen Stückgutverteilungen zu überwachen und bei Unterschreitung eines vorgegebenen (Dichte-)Schwellenwerts neue Stückgüter 24 nachzuführen. Fig. 4 zeigt ein Flussdiagramm eines Verfahrens 110 zum Nachführen der neuen Stückgüter 24.

Das Verfahren 110 der Fig. 4 basiert auf dem gleichen ersten Schritt S10 wie das Verfahren 100 der Fig. 3. Im Schritt S10 werden die Stückgutverteilungen kreislaufspezifisch mit den Kameraeinheiten 22 erfasst. Die entsprechenden Bilddaten 68 werden wiederum an die Steuereinheit 62 gesendet, die aus den kreislaufspezifischen Stückgutverteilungen eine jeweilige Stückgutdichte für jeden der Kreisläufe 20 bestimmt. Dies erfolgt in einem Schritt S20. Die Bestimmung der kreislaufspezifischen Stückgutdichten kann auf Basis der Positionen und Ausrichtungen der einzelnen Stückgüter 24 erfolgen (vergleiche Schritt S12 der Fig. 3). Alternativ können zum Beispiel Momentaufnahmen eines fest definierten Abschnitts (Flächeninhalt) der jeweiligen Förderer 42 hinsichtlich der Anzahl der dort vorhandenen Stückgüter 24 ausgewertet werden.

In einem Schritt S22 werden die im Schritt S20 bestimmten kreislaufspezifischen Stückgutdichten mit kreislaufspezifischen (Dichte-)Schwellenwerten verglichen. Wenn die Stückgutdichte eines der Kreisläufe 20 einen vorgegebenen kreislaufspezifischen Schwellenwert unterschreitet, so muss der entsprechende Kreislauf 20 mit den neuen Stückgütern 24 aufgefüllt werden. Anderenfalls ist ein Nachschub nicht erforderlich und die Überwachung der Stückgutverteilung wird einfach fortgesetzt.

Wenn die kreislaufspezifische Stückgutdichte jedoch unterschritten ist, veranlasst die Steuereinheit 16 den Nachschub der neuen Stückgüter 24 für den betroffenen Kreislauf 20. Der Nachschub kann automatisiert oder manuell erfolgen. In den Fig. 1 und 2 ist ein manueller Nachschub gezeigt. Im Falle eines automatisierten Nachschubs (Zuführeinrichtung 26 ist zum Beispiel in Form eines Bandförderers 30 implementiert) werden die neuen Stückgüter 24 auf Veranlassung der Steuereinheit 16 in einem Schritt S26 dem betroffenen Kreislauf 20 zugeführt, indem die entsprechende Zuführeinheit 26 betätigt wird. Die Steuereinheit 16 kann zum Beispiel den Bandförderer 30 um eine bestimmte Strecke bewegen, so dass eine bestimmte Anzahl der neuen Stückgüter 24 auf den betroffenen Förderer 42 fällt.

Der Nachschub kann auch manuell erfolgen, indem die Steuereinheit 16 die Bedienperson 34 über eine Anzahl von nachzuführenden Stückgütern 24 informiert. Dies ist im Schritt S28 angedeutet. Die Steuereinheit 16 informiert die Bedienperson 34 generell z.B. über ein Hand-Terminal, dass die Bedienperson 34 an ihrem Arm trägt. Alternativ könnte eine optische Anzeige (z.B. Ziffernanzeige, Lampe, etc.) in der Kommissionierzelle 10 vorgesehen sein, die jeden der Kreisläufe eindeutig identifiziert und anzeigt, dass nachgefüllt werden muss bzw. eine Stückgutdichtenschwelle unterschritten ist. Die Benachrichtigung kann auch akustisch erfolgen. Die Bedienperson 34 schüttet dann die neuen Stückgüter 24, die sie zuvor von einer der Paletten 64 (vergleiche Fig. 2) aus dem Vorrat 62 entnommen hat, direkt auf den betroffenen Förderer 42.

Es versteht sich, dass der Nachschub auch eine Kombination aus automatisierten und manuellen Vorgängen sein kann. Der Nachschub von der Zuführeinheit 26 auf den Förderer 42 kann dabei automatisiert erfolgen, zum Beispiel mittels eines Bandförderers 30. Der Bandförderer 30 wird aber manuell mit den neuen Stückgütern 24 befüllt. Bei einer entsprechenden Dimensionierung der Zuführeinheit 26 können sehr viele der neuen Stückgüter 24 gepuffert werden, bevor sie an den Förderer 42 abgegeben werden. Somit ist es möglich, dass die Bedienperson 34 eine Vielzahl von Kommissionierzellen 10 mit den Stückgütern 24 versorgt, ohne dass eine der Zuführeinheiten 26 leer läuft.

Zurückkehrend zur Fig. 4 werden die neuen Stückgüter 24 also in einem Schritt S30 kreislaufspezifisch zugeführt. Anschließend kehrt man zum Schritt S10 zurück.

Fig. 5 zeigt ein Blockdiagramm der Steuereinheit 16. Die Steuereinheit 16 ist vorzugsweise modular aufgebaut.

Die Steuereinheit 16 weist eines oder mehrere der nachfolgend genannten Module auf: Modul 120 zur Positionsbestimmung, Modul 122 zur Orientierungsbestimmung, Modul 124 zur Dichtebestimmung, Modul 128 für eine Auftragsverwaltung, Modul 130 für eine Materialflussverwaltung, Modul 132 für eine Schnittstellenverwaltung und/oder Modul 134 für eine Kommunikation. Ferner weist die Steuereinheit 16 eine Speichereinrichtung 126 sowie einen Prozessor 136 auf. Im Speicher 126 können zum Beispiel die kreislaufspezifischen Stückgutdichten und die Stückgutattribute ("Teach-Parameter") hinterlegt sein. Es versteht sich, dass die verschiedenen Module der Steuereinheit 16 in Form von Hardware, Software oder einer Kombination aus Hardware und Software implementiert sind. Ferner versteht es sich, dass die Steuereinheit 16 zentral oder dezentral verteilt angeordnet sein kann. So können die Kameraeinheiten 22 zum Beispiel bereits die Module 120, 122 und 124 integriert haben, wohingegen die restlichen Module zum Beispiel in einem Zentralrechner (nicht dargestellt) integriert sind, der unter anderem für den Materialfluss und die Lagerverwaltung verantwortlich ist.

In der obenstehenden Beschreibung der Figuren hat man sich bei der Wahl der Orientierung des Koordinatensystems generell an die in der Intralogistik üblichen Bezeichnungen gehalten, so dass die Längsrichtung mit X, die Höhe mit Y und die Querrichtung mit Z bezeichnet sind.

Des Weiteren wurden gleiche Teile und Merkmale mit gleichen Bezugszeichen versehen. Die in der Beschreibung enthaltenen Offenbarungen sind sinngemäß auf ähnliche Teile und Merkmale mit ähnlichen Bezugszeichen übertragbar. Lage- und Orientierungsangaben (zum Beispiel "oben", "unten", "seitlich", "längs", "quer", "horizontal", "vertikal" und Ähnliches) sind auf die unmittelbar beschriebene Figur bezogen. Bei einer Änderung der Lage oder Orientierung sind diese Angaben aber sinngemäß auf die neue Lage bzw. Orientierung zu übertragen.

### BEZUGSZEICHENLISTE

- 10: Kommissionierzelle
- 12: Lager- und Kommissionierungssystem
- 14: Auftragsbehälter-Fördertechnik
- 16: Steuereinheit
- 18: (Umsetz-)Roboter
- 20: (Versorgungs-)Kreislauf
- 22: Kameraeinheit
- 24: Stückgut
- 26: Zuführeinheit
- 28: Führung
- 30: Fördereinrichtung
- 32: Rutsche
- 34: Bedienperson
- 36: Aktionsraum von 18
- 38: Greifarm
- 40: Greifeinheit
- 41: Gestell
- 42: Versorgungsförderer
- 44: Umlaufrichtung von 42
- 46: Förderfläche
- B: Breite von 42
- 48: Übergabeeinrichtung
- 50: Rutsche
- 52: Anschlug
- 54: Auftragsbehälter
- 56: Förderrichtung von 14
- 58: Gurtförderer
- 62: Vorrat
- 64: Palette
- 66: Abweiser-Elemente
- 68: Bilddaten (Fig. 1)
- 70: drahtlose Verbindung
- 72: Umsetzbefehl
- 74: Zielstellen
- 80: bewegliche Plattform
- 100: Kommissionierverfahren
- 110: Nachfüllverfahren
- 120: Positionsbestimmungsmdoul
- 122: Orientierungsbestimmungsmodul
- 124: Dichtebestimmungsmodul
- 126: Speichermodul
- 128: Auftragsverwaltungsmodul
- 130: Materialflussverwaltungsmodul
- 132: Schnittstellenverwaltungsmodul
- 134: Kommunikationsmodul
- 136: Prozessor

## Patentansprüche

1. Automatisierte Kommissionierzelle (10) für Stückgüter mit einer hohen Zugriffshäufigkeit, die aufweist:
einen Umsetz-Roboter (18), der einen Greifarm (38) mit einer Greifeinheit (40) aufweist, wobei der Greifarm (38) innerhalb eines Aktionsraums (36) beweglich ist und wobei die Greifeinheit (40) eingerichtet ist, einzelne der Stückgüter (24) zu greifen;
mindestens zwei von einander getrennte Versorgungs-Kreisläufe (20), die jeweils einen in sich geschlossenen Versorgungsförderer (42) aufweisen, wobei jeder der Kreisläufe (20) den Aktionsraum (36) des Roboters (18) durchquert, wobei jeder der Versorgungsförderer (42) eine Förderfläche (44) aufweist, auf der die Stückgüter (24) chaotisch positioniert sind und ladungsträgerlos endlos umlaufend (44) transportiert werden;
mindestens eine Kameraeinheit (22), wobei jede der Kameraeinheiten (22) eingerichtet ist, eine geometrische Verteilung der Stückgüter (24) auf zumindest einem der Versorgungsförderer (42) optisch zu erfassen und in Bilddaten (68) umzuwandeln, wobei die kreislaufspezifische Verteilung der Stückgüter (24) durch eine jeweilige Position und eine jeweilige Ausrichtung der Stückgüter (24) auf dem jeweiligen Versorgungsförderer (42) definiert ist und wobei jedem der Kreisläufe (20) mindestens eine der Kameraeinheiten (22) zugeordnet ist; und
eine Steuereinheit (16), die zwecks einer Datenübertragung mit jeder der Kameraeinheiten (22) sowie mit dem Roboter (18) verbunden ist und die eingerichtet ist, aus den Bilddaten (68) eine jeweilige Position und Ausrichtung der optisch erfassten Stückgüter (24) zu bestimmen, um den Roboter (18) zum Umsetzen der Stückgüter (24) zu veranlassen, die gemäß einem Kommissionierauftrag benötigt werden, wobei die Steuereinheit für eine Aufrechterhaltung hinreichender kreislaufspezifischer Stückgutdichten sorgt.

2. Kommissionierzelle nach Anspruch 1, **dadurch gekennzeichnet, dass** mindestens eine Zuführeinheit (26) aufweist, wobei jeder der Zuführeinheiten (26) eine Führung (28) aufweist, um den jeweiligen Versorgungsförderern (20) gezielt neue Stückgüter (24) zuzuführen, wobei jedem der Kreisläufe (20) eine der Zuführeinheiten (26) zugeordnet ist.

3. Kommissionierzelle nach Anspruch 2, wobei jede der Zuführeinheiten (26) einen Stückgutpuffer aufweist, der zur Bevorratung einer hinreichenden Anzahl der neuen Stückgüter (24) eingerichtet ist.

4. Kommissionierzelle nach Anspruch 2 oder 3, wobei jede der Zuführeinheiten (26) eine angetriebene Fördereinrichtung (30) aufweist, die mit der Steuereinheit (16) zwecks einer Datenübertragung verbunden ist und die von der Steuereinheit (16) getaktet bewegbar ist, um die neuen Stückgüter (24) an einen der Kreisläufe (20) abzugeben.

5. Kommissionierzelle nach einem der Ansprüche 1 bis 4, wobei die Steuereinheit (16) ferner eingerichtet ist, aus den Bilddaten (68) kreislaufspezifische Stückgutdichten zu bestimmen und mit kreislaufspezifischen Dichteschwellen zu vergleichen, um ein kreislaufspezifisches Zuführen neuer Stückgüter (24) zu veranlassen, wenn eine entsprechende der Dichteschwellen unterschritten ist.

6. Kommissionierzelle nach einem der Ansprüche 1 bis 5, wobei die Steuereinheit (16) eingerichtet ist, die Versorgungsförderer (42) während Umsetzvorgängen kontinuierlich fortzubewegen.

7. Kommissionierzelle nach einem der Ansprüche 1 bis 6, wobei jeder der Kreisläufe (20) eingerichtet ist, ausschließlich Stückgüter (24) eines einzigen Stückguttyps zu transportieren, und jeder der Kreisläufe (20) eingerichtet ist, einen anderen Stückguttyp zu transportieren.

8. Kommissionierzelle nach einem der Ansprüche 1 bis 7, die ferner eine Auftragsladehilfsmittel-Fördertechnik (14) aufweist, die eingerichtet ist, Auftragsladehilfsmittel (54) durch den Aktionsraum (36) des Roboters (18) zu transportieren, so dass der Roboter (18) gegriffene Stückgüter (24) direkt an die Auftragsladehilfsmittel (54) abgeben kann, während die Auftragstadehilfsmittel (54) auf der Auftragsladehilfsmittel-Fördertechnik (14) durch den Aktionsraum (36) des Roboters (18) transportiert werden.

9. Kommissionierzelle nach einem der Ansprüche 1 bis 7, die ferner eine Auftragsladehilfsmittel-Fördertechnik (14) sowie eine Vielzahl von Übergabeeinrichtungen (48) aufweist, wobei die Übergabeeinrichtungen (48) so angeordnet sind, dass der Roboter (18) die gegriffenen Stückgüter an jede der Übergabeeinrichtungen (48) abgeben kann, wobei jede der Übergabeeinrichtungen (48) eine Längserstreckung aufweist, die oberhalb der Auftragsladehilfsmittel-Fördertechnik (14) endet, so dass abgegebene Stückgüter (24) von oben in Auftragsladehilfsmittel (54) bewegbar sind, die auf der Auftragsladehilfsmittel-Fördertechnik (14) transportiert werden.

10. Kommissionierzelle nach einem der Ansprüche 1 bis 9, wobei die Kreisläufe ferner starre Abweiser-Elemente (66) aufweisen, die oberhalb der Förderflächen (46) angeordnet sind und die die Verteilung der Stückgüter (24) auf den sich bewegenden Versorgungsförderern (42) ändern.

11. Verfahren zum automatisierten Kommissionieren von mindestens zwei verschiedenen Stückguttypen, vorzugsweise mit einer Kommissionierzelle (10) nach einem der Ansprüche 1 bis 9, wobei jeder der Stückguttypen eine hohe Zugriffshäufigkeit hat, mit folgenden Schritten:
Bereitstellen einer Vielzahl von ersten Stückgütern (24-1) ausschließlich eines ersten Stückguttyps in einer ausreichend hohen Stückgutdichte, indem die ersten Stückgüter (24-1) auf einem ersten Versorgungsförderer (42-1) eines ersten Versorgungs-Kreislaufs (20-1) endlos kreisend durch einen festen Aktionsraum (36) eines UmsetzRoboters (18) geführt werden;
Bereitstellen einer Vielzahl von zweiten Stückgütern (24-2) ausschließlich eines zweiten Stückguttyps, der sich vom ersten Stückguttyp unterscheidet, in einer ausreichend hohen Stückgutdichte, indem die zweiten Stückgüter (24) auf einem zweiten Versorgungsförderer (42-2) eines zweiten Versorgungs-Kreislaufs (20) endlos kreisend durch den festen Aktionsraum (36) des Roboters (18) geführt werden, wobei sich die Kreisläufe (20) nicht kreuzen;
Optisches Erfassen einer Verteilung der ersten und zweiten Stückgüter (24) und Erzeugen entsprechender Bilddaten (68) mittels einer Kameraeinheit (22);
Senden der Bilddaten (68) von der Kameraeinheit (22) an eine Steuereinheit (16);
Bestimmen einer Position und einer Ausrichtung von jedem der ersten und zweiten Stückgüter (24) mittels der Steuereinheit (16);
Bestimmen eines Umsetzbefehls (72) für den Roboter (18) auf Basis der bestimmten Positionen und Ausrichtungen und in Abhängigkeit von einem Kommissionierauftrag, der eine vorgegebene Anzahl der ersten und/oder zweiten Stückgüter (24) enthält;
Greifen der Stückgüter (24), Umsetzen der gegriffenen Stückgüter und Abgeben der umgesetzten Stückgüter gemäß dem Umsetzbefehl (72) an eine Zielstelle (74).

12. Verfahren nach Anspruch 11, wobei die Versorgungsförderer (42) während eines Umsetzvorgangs kontinuierlich fortbewegt werden.

13. Verfahren nach einem der Ansprüche 11 oder 12, wobei aus den Bilddaten (68) kreislaufspezifische Stückgutdichten bestimmt werden.

## Claims

1. Automated picking cell (10) for piece goods having a high access frequency comprising:
a transferring robot (18) comprising a grip arm (38) having a grip unit (40), wherein the grip arm (38) is movable within an action space (36) and wherein the grip unit (40) is configured to grip individual ones of the piece goods (24);
at least two supply cycles (20) which are separated from each other and which respectively comprise one closed supply conveyor (42), wherein each of the cycles (20) traverses the action space (36) of the robot (18), wherein each of the supply conveyors (42) comprises a conveying surface (44) on which the piece goods are positioned chaotically and transported endlessly rotating (44) without load supports;
at least one camera unit (22), wherein each of the camera units is configured to detect optically a geometric distribution of the piece goods (24) on at least one of the supply conveyors (42) and to convert into image data (68), wherein the cycle-specific distribution of the piece goods (24) is defined by a respective position and a respective orientation of the piece goods (24) on the respective supply conveyor (42), and wherein each of the cycles (20) has assigned at least one of the camera units (22); and
a control unit (16) which is connected, for the purpose of data transfer, to each of the camera units (22) as well as to the robot (18) and which is configured to determine from the image data (68) a respective position and orientation of the optically detected piece goods (24) in order to exit the robot (18) for transferring the piece goods (24) which are required in accordance with a picking order, wherein the control unit takes care that cycle-specific piece-good densities are sufficiently maintained.

2. The picking cell of claim 1, **characterized by** comprising at least one feeding unit (26), wherein each of the feeding units (26) comprises a guidance (28) for feeding selectively new piece goods (24) to the respective supply conveyors (20), wherein each of the cycles (20) has assigned one of the feeding units (26).

3. The picking cell of claim 2, wherein each of the feeding units (26) comprises a piece-good buffer configured for storing a sufficient number of the new piece goods (24).

4. The picking cell of claim 2 or 3, wherein each of the feeding units (26) comprises a driven conveying device (30) connected to the control unit (16) for the purpose of data transmission and being movable in a clocked manner by the control unit (16) for delivering the new piece goods (24) to one of the cycles (20).

5. The picking cell of any of claims 1 to 4, wherein the control unit (16) is further configured to determine, from the image data (68), cycle-specific piece-good densities and to compare the same with cycle-specific density thresholds in order to cause a cycle-specific feeding of new piece goods (24) if a corresponding one of the density thresholds is fallen below.

6. The picking cell of any of claims 1 to 5, wherein the control unit (16) is configured to continuously move the supply conveyors (42) during transfer processes.

7. The picking cell of any of claims 1 to 6, wherein each of the cycles (20) is configured to transport exclusively piece goods (24) of one single piece-good type, and wherein each of the cycles (20) is configured to transport a different piece-good type.

8. The picking cell of any of claims 1 to 7, further comprising an order-load support conveying system (14) which is configured to transport order-load supports (54) through the action space (36) of the robot (18) so that the robot (18) can deliver directly gripped piece goods (24) to the order-load supports (54) while the order-load supports (54) are transported through the action space (36) of the robot (18) on the order-load support conveying system (14).

9. The picking cell of any of claims 1 to 7, further comprising an order-load support conveying system (14) as well as a plurality of handing-over devices (48), wherein the handing-over devices (48) are arranged so that the robot (18) can deliver the gripped piece goods to each of the handing-over devices (48), wherein each of the handing-over devices (48) has a longitudinal extension ending above the order-load support conveying system (14) so that delivered piece goods (24) can be moved from above into the order-load supports (54) which are transported on the order-load support conveying system (14).

10. The picking cell of any of claims 1 to 9, wherein the cycles further comprise rigid rejecting elements (66) being arranged above the conveying surface (46) and changing the distribution of the piece goods (24) on the moving supply conveyors (42).

11. A method for automated picking of at least two different piece-good types, preferably by a picking cell (10) of any of claims 1 to 9, wherein each of the piece-good types has a high access frequency comprising the steps of:
providing a plurality of first piece goods (24-1) of a first piece-good type only in a sufficiently high piece-good density by guiding the first piece goods (24-1) on a first supply conveyor (42-1) of a first supply cycle (20-1) in an endlessly rotating manner through a fixed action space (36) of a transferring robot (18);
providing a plurality of second piece goods (24-2) of a second piece-good type only, which is different to the first piece-good type, in a sufficiently high piece-good density by guiding the second piece goods (24) on a second supply conveyor (42-2) of a second supply cycle (20) in an endlessly rotating manner through the fixed action space (36) of the robot (18), wherein the cycles (20) do not cross;
optically detecting a distribution of the first and second piece goods (24) and generating corresponding image data (68) by means of a camera unit (22);
transmitting the image data (68) from the camera unit (22) to a control unit (16);
determining a position and orientation of each of the first and second piece goods (24) by means of the control unit (16);
determining a transfer command (72) for the robot (18) on the basis of the determined positions and orientations and dependent on a picking order which contains a predetermined number of the first and/or second piece goods (24);
gripping the piece goods (24), transferring the gripped piece goods, and delivering the transferred piece goods in accordance with the transfer command (72) to a target location (74).

12. The method of claim 11, wherein the supply conveyors (42) are moved continuously during a transfer process.

13. The method of one of claims 11 or 12, wherein cycle-specific piece-good densities are determined from the image data (68).

## Revendications

1. Cellule automatique (10) de colisage de pièces présentant une haute fréquence d'accès, la cellule présentant :
un robot de production (18) qui présente un bras de saisie (38) doté d'une unité de saisie (40), le bras de saisie (38) pouvant être déplacé à l'intérieur d'un espace d'action (36) et l'unité de saisie (40) étant conçue pour saisir les pièces (24) une à une,
au moins deux circuits (20) d'alimentation séparés l'un de l'autre qui présentent un transporteur d'alimentation (42) intrinsèquement fermé, chacun des circuits (20) traversant l'espace d'action (36) du robot (18), chacun des transporteurs d'alimentation (42) présentant une surface de transport (44) sur laquelle les pièces (24) sont placées dans le désordre et sont transportées en boucle sans fin (44) sans support de charge,
au moins une unité de caméra (22), la ou les unités de caméra (22) étant conçues pour saisir optiquement la répartition géométrique des pièces (24) sur au moins l'un des transporteurs d'alimentation (42) et pour les convertir en données d'image (68), la répartition des pièces (24) particulières au circuit fermé étant définie par une position et une orientation de chaque pièce (24) sur le transporteur d'alimentation (42) concerné, au moins une des unités de caméra (22) étant associée à chacun des circuits (20) et
une unité de commande (16) qui, dans le but d'un transfert de données avec chacune des unités de caméra (22) ainsi qu'avec le robot (18), est raccordée et conçue pour déterminer à partir des données d'image (68) la position et l'orientation de chacune des pièces (24) saisies optiquement pour amener le robot (18) à prendre les pièces (24) nécessaires selon la commande de colisage, l'unité de commande assurant le maintien de densités de pièces suffisantes dans chaque circuit.

2. Cellule de colisage selon la revendication 1, **caractérisée en ce qu'**elle présente au moins une unité d'amenée (26), un guide (28) étant associé à chacune des unités d'amenée (26) pour amener de manière contrôlée de nouvelles pièces (24) aux transporteurs d'alimentation (20) concernés, une des unités d'amenée (26) étant associée à chaque circuit (20).

3. Cellule de colisage selon la revendication 2, dans laquelle chacune des unités d'amenée (26) présente un tampon à pièces qui est conçu pour conserver un nombre suffisant de nouvelles pièces (24).

4. Cellule de colisage selon les revendications 2 ou 3, dans laquelle chacune des unités d'amenée (26) présente un dispositif de transport (30) entraîné qui est raccordé à transfert de données à une unité de commande (16) et qui peut être déplacé de manière cadencée par l'unité de commande (16) pour délivrer les nouvelles pièces (24) à l'un des circuits (20).

5. Cellule de colisage selon l'une des revendications 1 à 4, dans laquelle l'unité de commande (16) est en outre conçue pour déterminer à partir des données d'image (68) les densités de pièces sur chaque circuit et pour les comparer à des seuils de densité spécifiques à chaque circuit pour lancer l'amenée de nouvelles pièces (24) de manière spécifique à chaque circuit si un seuil de densité correspondant n'est plus atteint.

6. Cellule de colisage selon l'une des revendications 1 à 5, dans laquelle l'unité de commande (16) est conçue pour faire déplacer en continu les transporteurs d'alimentation (42) pendant les opérations de production.

7. Cellule de colisage selon l'une des revendications 1 à 6, dans laquelle chacun des circuits (20) est conçu pour transporter uniquement des pièces (24) d'un type unique de pièces, chacun des circuits (20) étant conçu pour transporter un autre type de pièces.

8. Cellule de colisage selon l'une des revendications 1 à 7, présentant en outre une technique (14) de transport de moyens auxiliaires de chargement conçue pour transporter des moyens auxiliaires (54) de chargement dans l'espace d'action (36) du robot (18) de telle sorte que le robot (18) puisse délivrer directement les pièces (24) saisies aux moyens (54) auxiliaires de chargement, tandis que les moyens (54) auxiliaires de chargement sont transportés sur la technique de transport (14) de moyens auxiliaires de chargement à travers l'espace d'action (36) du robot (18).

9. Cellule de colisage selon l'une des revendications 1 à 7, présentant en outre une technique (14) de transport de moyens auxiliaires de chargement ainsi que plusieurs dispositifs de transfert (48), les dispositifs de transfert (48) étant disposés de telle sorte que le robot (18) puisse délivrer à chacun des dispositifs de transfert (48) les pièces qu'il a saisies, chacun des dispositifs de transfert (48) présentant une extension longitudinale qui se termine au-dessus de la technique de transport (14) de moyens de chargement de telle sorte que les pièces (24) délivrées puissent être déplacées depuis le haut dans des moyens (54) auxiliaires de transport qui sont transportés sur la technique de transport (14) de moyens auxiliaires de chargement.

10. Cellule de colisage selon l'une des revendications 1 à 9, dans laquelle les circuits présentent en outre des éléments rigides d'écartement (66) disposés au-dessus des surfaces de transport (46) et qui modifient la répartition des pièces (24) sur les transporteurs d'alimentation (42) en déplacement.

11. Procédé de colisage automatique d'au moins deux types différents de pièces, de préférence à l'aide d'une cellule de colisage (10) selon l'une des revendications 1 à 9, chacun des types de pièces présentant une haute fréquence de saisie, le procédé présentant les étapes suivantes :
préparer plusieurs premières pièces (24-1) exclusivement d'un premier type de pièces à une densité suffisamment élevée de pièces en guidant les premières pièces (24-1) sur un premier transporteur d'alimentation (42-1) d'un premier circuit d'alimentation (20-1) en boucle fermée à travers un premier espace d'action (36) d'un robot de production (18),
préparer plusieurs deuxièmes pièces (24-2) exclusivement d'un deuxième type de pièces différent du premier type de pièces à une densité suffisamment élevée de pièces en guidant les deuxièmes pièces (24) sur un deuxième transporteur d'alimentation (42-2) d'un deuxième circuit d'alimentation (20) en boucle fermée à travers l'espace fixe d'action (36) du robot (18), les circuits (20) ne se croisant pas,
saisir optiquement la répartition des premières et des deuxièmes pièces (24) et formation de données d'image (68) correspondantes au moyen d'une unité de caméra (22),
faire envoyer les données d'image (68) par l'unité de caméra (22) à une unité de commande (16),
déterminer la position et l'orientation de chacune des premières et des deuxièmes pièces (24) au moyen de l'unité de commande (16),
définir une commande de colisage (72) pour le robot (18) sur la base des positions et des orientations qui ont été définies et en fonction d'une commande de colisage qui contient un nombre prédéterminé de premières et/ou de deuxièmes pièces (24) et
saisir les pièces (24), placer les pièces saisies et amener en un emplacement cible (74) les pièces placées selon la commande de colisage (72).

12. Procédé selon la revendication 11, dans lequel les transporteurs d'alimentation (42) sont déplacés en continu pendant une opération de production.

13. Procédé selon l'une des revendications 11 ou 12, dans lequel des densités de pièces sont définies pour chaque circuit à partir des données d'image (68).
